# EUROPÄISCHE PATENTSCHRIFT

(11) **EP 0 336 183 B1**
(45) Veröffentlichungstag und Bekanntmachung des Hinweises auf die Patenterteilung: **25.08.1993**
(21) Anmeldenummer: 89104888.6
(22) Anmeldetag: 18.03.1989
(51) Int. Cl.: F16B 13/12, F16B 13/14, B23Q 3/10

(54) **Befestigungseinrichtung eines Gewindebauteils in einem hinterschnittenen Bohrloch**
Fixation device for a threaded part in an undercut hole
Dispositif de fixation d'une partie filetée dans un trou à chambrage

(30) Priorität: 02.04.1988 DE 3811249; 19.12.1988 DE 3842683; 02.09.1988 DE 3829813
(43) Veröffentlichungstag der Anmeldung: 11.10.1989
(73) Patentinhaber: Eischeid, Karl, 51766 Engelskirchen (DE)
(72) Erfinder: Eischeid, Karl, 51766 Engelskirchen (DE)
(74) Vertreter: Sturies, Herbert

(56) Entgegenhaltungen:
- EP-A- 0 220 424
- EP-A- 0 250 783
- FR-A- 1 568 583
- GB-A- 618 489

## Beschreibung

Die Erfindung bezieht sich auf eine Befestigungseinrichtung eines Gewindebauteils in einem nicht durchgehenden hinterschnittenen Bohrloch, in dem ein bohrungssohlenseitig längsgeschlitzter Dübel angeordnet ist, der an seinem inneren Ende der Form der Hinterschneidung des Bohrlochs entsprechend vorgeformt ist, der ein eine Längsverstellung des Gewindebauteils gestattenden Innengewinde aufweist, und dessen Spreizlappen von dem Gewindebauteil in die Hinterschneidung gespreizt gehalten sind.

Bekannte Befestigungseinrichtungen dieser Art werden für Schwerbefestigungen eingesetzt, bei denen schwere Lasten tragende Teile z.B. an Bauwerken befestigt werden müssen. In das Bohrloch wird ein Gewindebauteil eingesetzt, das an seinem einen Ende ein Befestigungsgewinde aufweist, auf das eine Befestigungsmutter zur Befestigung des festzulegenden Teils aufgeschraubt werden kann. Das andere Ende ist mit einem Spreizkegel versehen, der sich auf der Bohrungssohle abstützt, und auf den eine das Gewindebauteil umgebende, mit Spreizlappen versehene Spreizhülse aufgetrieben werden kann, deren Lappen sich beim Auftreiben spreizen und in die Hinterschneidung des Bohrlochs gelangen, so daß das Gewindebauteil nicht mehr aus dem Bohrloch herausgezogen werden kann. Eine derartige Montage setzt voraus, daß sich das Gewindebauteil bzw. sein Spreizdübel bei dessen Einschlagen an der Bohrungssohlenseite unter Übertragung der Schlagkräfte abstützen kann. Das ist jedoch nicht stets der Fall. Es gibt vielmehr Befestigungen, bei denen eine schlagartige Belastung des das Bohrloch bildenden Werkstoffs nicht möglich ist und auch eine dauernde Beaufschlagung des Werkstoffs durch Spreizkräfte nicht annehmbar ist. Es ist auch möglich, daß die dem abzustützenden Gewindebauteil in Schlagrichtung zur Verfügung stehende Wanddicke ausbruchgefährdet ist.

Es sind Messingdübel allgemein bekannt, in welche Schrauben zum Spreizen von Spreizlappen eindrehbar sind, die sich infolgedessen in den das Bohrloch bildenden Werkstoff eingraben. Offensichtlich können solche Dübel jedoch nicht für spannungsempfindliche oder dünnwandige Werkstücke eingesetzt werden.

Aus der EP-A-0 250 783 ist eine Befestigungseinrichtung mit den eingangs genannten Merkmalen bekannt. Das Gewindebauteil ist eine Holzschraube, die sich beim Einschrauben in den Dübel an dessen Spreizlappen absgtützt, jedoch nur in einem begrenzt langen Übergangsbereich nahe den für die Hinterschneidung vorgesehenen Vorformungen der Spreizlappen. Es wird eine Verspannung des Dübels im Bohrloch erreicht. Derartige Verspannungen sind bei spannungsempfindlichen oder dünnwandigen Werkstücken nicht annehmbar.

Es ist allgemein bekannt, einen Dübel mit einem Innengewinde zum Einschrauben eines Gewindebauteils zu versehen. FR-A-1 558 583 zeigt einen solchen Dübel mit Innengewinde, das sich bis in die Nähe einer inneren konusförmigen Verjüngung erstreckt. In das Innengewinde wird eine Rundkopfschraube zur Befestigung eines Bauteils eingeschraubt. Die Schraube ist länger als das Gewinde, so daß der Dübel gespreizt wird. Infolge der Spreizung muß der Dübel gegen die Wand einer Bohrung drücken, so daß auch dieser bekannte Dübel nicht für spannungsempfindliche oder dünnwandige Werkstücke geeignet ist.

Der Erfindung liegt demgegenüber die Aufgabe zugrunde, eine Befestigungseinrichtung der eingangs genannten Art so zu verbessern, daß sie auch für Werkstücke aus bruchempfindlichen Werkstoffen anwendbar ist, wie Glas, Marmor od.dgl., und daß sie insbesondere bei dünnen Wänden einsetzbar ist.

Diese Aufgabe wird dadurch gelöst, daß der Dübel mit einem Innengewinde zum Einschrauben des Gewindebauteils versehen ist, das die Vorformungen über deren gesamte Höhe abstützt.

Für die Erfindung ist von Bedeutung, daß die Spreizlappen des längsgeschlitzten Dübels bereits der Form der Hinterschneidung entsprechend vorgeformt sind. Das Gewindebauteil braucht dann lediglich eingeschraubt zu werden, um die Vorformungen in den Hinterschneidungen zu halten. Beim Einschrauben hat das Gewindebauteil lediglich die durch den Dübel bedingten Verformungskräfte aufzubringen, die anhand der Konstruktion des Dübels berechenbar sind und sich daher in festlegbaren Grenzen halten können, so daß der Einbau des Dübels mit nur geringen Kräften erfolgen kann und von daher eine Beschädigung des Werkstoffs, beispielsweise des Werkstoffs einer Glasscheibe oder die Gefährdung der gesamten Glasscheibe selbst nur gering ist. Wenn der Dübelwerkstoff elastisch ist, können seine Spreizlappen vor dem Einbau zusammengedrückt werden und spreizen sich in Einbaulage selbsttätig, ohne Kraftanwendung durch das Gewindebauteil. Die Vorformungen des Dübels werden im Sinne einer formschlüssigen Verankerung ausgebildet, ohne daß radiale oder axiale Spreizkräfte in das Werkstück abgetragen werden müssen.

Ein besonders vorteilhafter Einsatzbereich der erfindungsgemäßen Befestigungseinrichtung ist das Befestigen von Platten, insbesondere von Fassadenplatten. Derartige Fassadenplatten werden herkömmlicherweise mit einer Durchgangsbohrung versehen und mit Durchsteckelementen befestigt, die an außenliegenden Flächen Abdichtungselemente haben müssen, damit die Durchgangsbohrungen dicht sind. Es ist aber unvermeidlich, daß sich im Laufe der Zeit Undichtigkeiten einstellen. Auch die Ansehnlichkeit der Plattenaußenseiten leidet durch die Befestigung- und Dichtungselemente. Demgegenüber ist es mit der Befestigungseinrichtung möglich, vergleichsweise dünne Glas- und Marmorplatten mit nicht durchgehenden Bohrlöchern zu befestigen, so daß also die Dichtigkeit automatisch gewährleistet ist und die glatte Plattenaußenfläche unversehrt bleibt. Die Vorformungen und ihre Spreizlappen sind ohne weiteres in der Lage, die bei solchen Platten auftretenden Gewichts- und Auszugskräfte hinreichend großflächig auf den Plattenwerkstoff zu übertragen.

Vorteilhafterweise weist der Dübel bohrungssohlenseitig ein einem Sohlenkegel angepaßten vorgeformten kegeligen Rücksprung auf. Der Dübel kann infolgedessen dicht am Bohrlochboden und unter Ausnutzung der peripheren Bohrlochtiefe angeordnet werden, also günstig im Hinblick auf plattenförmiges Material. Wäre der Rücksprung nicht vorhanden, müßte der Dübel höher oberhalb des Sohlenkegels enden, oder es müßte anstelle des Sohlenkegels zur Herstellung der Hinterschneidung eine Vertiefung vorgesehen werden, was zur Folge hätte, daß die Mindestmaterialstärke größer sein müßte.

In Ausgestaltung der Erfindung ist die Einrichtung so ausgebildet, daß die Schlitze des Dübels bis in die Nähe des ungeschlitzten Dübelendes reichen und eine das Zusammendrücken der Spreizlappen auf eine mindestens Bohrlochdurchmesser gestattende Breite haben und/oder daß der Dübel länger als das Bohrloch tief ist. Die vorgenannte Breite wird in erster Linie durch die radiale Erstreckung der Vorformungen der Spreizlappen bestimmt. Diese Vorformungen müssen radial einwärts so weit zurückgedrückt werden, daß der Dübel in den Hals des Bohrlochs gesteckt werden kann. Erforderlichenfalls ist hierzu eine Anpassung der Form der Schlitze notwendig. In diesem Sinne ist es vorteilhaft, daß die Schlitze des Dübels im Bereich der in die Hinterschneidung eingreifenden Vorformungen der Spreizlappen deren Zusammendrücken erlaubend erweitert sind. In diesem Sinne ist es auch vorteilhaft, wenn der Dübel aus dem Bohrloch herausragt, insbesondere bei einem verbleibenden dünnen Steg am ungeschlitzten Dübelende, weil dann eine größere Schenkellänge der Spreizlappen für deren Verformung zur Verfügung steht. Außerdem dient der aus dem Bohrloch herausstehende Dübel einer Verstärkung der Befestigungseinrichtung gegen Scherkräfte.

Die Schlitze müssen aber auch so ausgebildet sein, daß sie am ungeschlitzten Dübelende Stege bilden, die den Einbauanforderungen gerecht werden. Eine vorteilhafte Lösung besteht darin, daß der Dübel aus Metall besteht und die in sich unverformbaren Spreizlappen am ungeschlitzten Dübelende mit verformbaren Stegen zusammengehalten sind. Die Stege übernehmen das Erfordernis, den Dübel verformbar zu gestalten. Dabei bleiben die Spreizlappen unverformt und somit optimal an die Hinterschneidung und an ein leichtes Eindrehen des Gewindebauteils angepaßt.

Andererseits kann die erfindungsgemäße Einrichtung auch so ausgebildet werden, daß der Dübel aus verformbarem Werkstoff, insbesondere Kunststoff besteht oder verformbar ist und seine Spreizlappen von einem Einstecktrichter auf einen mindestens dem Bohrlochdurchmesser entsprechenden Außendurchmesser zusammendrückbar sind. Wenn der verformbare Werkstoff elastisch ist, springen die Spreizlappen von selbst in ihre Ausgangslage, sobald die Vorformungen zu der Hinterschneidung gelangen. Sofern der Werkstoff bzw. der Dübel nicht elastisch ist, drückt das Gewindebauteil die Spreizlappen auseinander.

Um die Montage zu erleichtern, hat der Dübel in seinem ungeschlitzten Dübelende mindestens eine sein mit einem Schlüssel erfolgendes Festhalten beim Eindrehen des Gewindebauteils gestattende Schlüsselöffnung.

Damit die Befestigungseinrichtung einen sicheren Zusammenhalt hat, ist sie so ausgebildet, daß das Gewindebauteil eine zumindest längs der Vorformungen der Spreizlappen Gewinde aufweisende Schraube ist, die bohrungssohlenseitig einen einem Sohlenkegel angepaßten vorgeformten kegeligen Rücksprung aufweist. Diese Ausgestaltung des Gewindebauteils gestattet es, die Spreizlappen über praktisch ihre gesamte Länge radial zu spreizen bzw. gespreizt zu halten. Zwischen dem Schraubenende und dem Sohlenkegel ist kein Raum, der ein Nichtspreizen bzw. ein Ausweichen der Spreizlappen begünstigt. Der Rücksprung der Schraube dient deren Zentrierung durch den Sohlenkegel. Das Gewindebauteil steht dann wie vorgesehen winklig. Infolgedessen wird auch der Dübel ausgerichtet, der insbesondere bei Glas od.dgl. Minustoleranzen gegenüber dem Bohrloch hat.

Insbesondere soll die vorgenannte Einrichtung so verbessert werden, daß ein Mitdrehen des Dübels verhindert wird. Das wird dadurch erreicht, daß der Dübel ein unrundes oberes Dübelende zur Anordnung in einer entsprechend unrunden Ausnehmung eines Bauteils hat.

Eine derartige Ausgestaltung der Befestigungseinrichtung erspart jedoch nicht nur die besondere Ausbildung des oberen Dübelendes hinsichtlich des Angriffs eines Arretierungsschlüssels, sondern es garantiert auch den bezüglich seiner Verdrehlage unveränderlichen Sitz des Dübels im Werkstück, weil letzteres mit seinem Bauteil fest verbunden sein kann. Darüber hinaus kann diese Befestigung so vorgenommen werden, daß die Ausnehmung des Bauteils und das Bohrloch fluchten. Infolgedessen kann in besonders vorteilhafter Weise derart verfahren werden, daß das Bauteil als Bohrlehre benutzt wird. Es wird also beispielsweise auf dem völlig ungebohrten Werkstück durch Kleben befestigt und dient - z.B. bei Ausbildung als Vierkant - der maßgenauen Führung des Vorbohrers ebenso, wie der Führung des die Hinterschneidung in der fertiggestellten Vorbohrung herstellenden Hinterschnittbohrers. Der Vorbohrer und der Hinterschnittbohrer können sich drehend in die Ausnehmung des Bauteils eingeführt werden, der Hinterschnittbohrer insbesondere dann, wenn er so ausgebildet ist, daß er sich gemäß eingangs erfolgter Beschreibung durch Fliehkraftwirkung in seine Einsteck- bzw. Auszugstellung bewegt.

Vorteilhafterweise ist die Einrichtung so ausgebildet, daß das Gewindebauteil eine zum Einbau des Dübels mit ihrem freien Ende in den Dübel eingeschraubte Kopfschraube ist. Bei dieser Ausgestaltung der Einrichtung können das Gewindebauteil und der dessen freies Ende aufnehmende Dübel eine Baueinheit bilden, welche auf die Länge des Werkstücks einerseits und die Dicke des Bauteils andererseits abgestimmt ist. Mit der Kopfschraube wird das Werkstück zusätzlich zu der z.B. durch Kleben erfolgten Befestigung befestigt, und zwar so, daß das innere Ende des Gewindebauteils nicht auf den Boden bzw. die Sohle des Bohrlochs drücken kann. Ein solches Aufstoßen des Gewindebauteils auf die Sohle des Bohrlochs würde das gewünschte Festlegen des Bauteils verhindern und insbesondere dann von Nachteil sein, wenn das Werkstück eine Platte ist, also eine geringere Dicke hat und aus einem spröden Werkstoff bestünde.

Eine vorteilhafte Einrichtung für Fassaden- bzw. Fensterkonstruktionen ergibt sich, wenn der Dübel mit den Verformungen seiner Spreizlappen spreizkraftfrei in der Hinterschneidung einer Platte angeordnet ist. Die Platte, die aus Kunststoff bestehen kann, kann ohne weiteres großflächig sein, auch spröde, z.B. aus Glas oder aus Keramik, und wird vom Bauteil mittels Dübels und Gewindebauteils sicher mechanisch gehalten, wobei das Kupplungsteil der Kraftübertragung auf eine Fassadenunterkonstruktion od.dgl. dient.

Die Erfindung wird anhand von in der Zeichnung dargestellten Ausführungsbeispielen erläutert. Es zeigt:
- Fig.1: einen Querschnitt durch eine Befestigungseinrichtung gemäß der Erfindung beim Zusammenbau,
- Fig.2: die Befestigungseinrichtung der Fig.1 nach erfolgtem Zusammenbau,
- Fig.3a bis d: Einzelheiten zu einer Befestigungseinrichtung anderer Ausführung,
- Fig.4: eine perspektivische Ansicht eines Dübels einer Befestigungseinrichtung,
- Fig.4a: einen Schnitt durch den Dübel der Fig.4,
- Fig.4b: die Ansicht A der Fig.4a,
- Fig.5: eine perspektivische Ansicht eines Werkstücks mit aufgesetztem Bauteil und der Anordnung einer Bohrung des letzteren und einer Hinterschnittbohrung des Werkstücks, und
- Fig.6: den Querschnitt V-V der Fig.5 mit eingebautem Gewindebauteil.

Die Befestigungseinrichtung 45 dient der Verankerung eines Gewindebauteils 10 in einem Werkstück 46, beispielsweise in einer zehn Millimeter starken Glas- oder Marmorplatte. Das Gewindebauteil 10 ist beispielsweise eine mit Innensechskant oder Schlitz versehene Schraube mit einem Gewinde 25. Das Gewindebauteil 10 kann auch jede vom Dargestellten abweichende Ausbildung haben, wenn dies z.B. zur Befestigung des Werkstücks 46 an einer tragenden Konstruktion erforderlich ist.

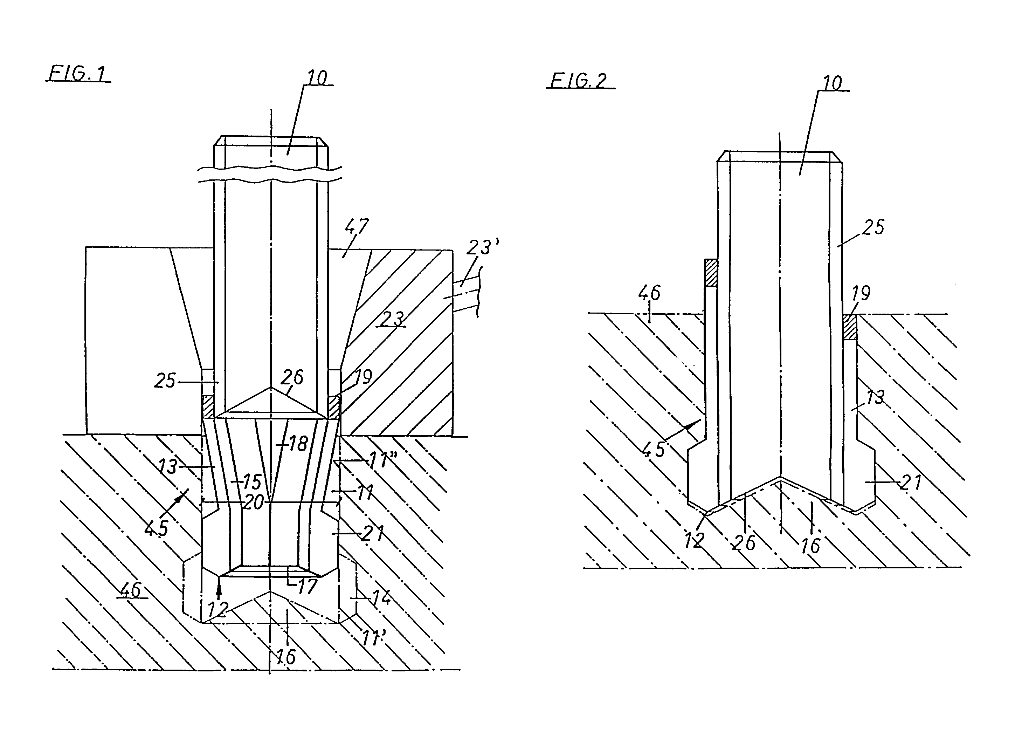

Im Werkstück 46 ist ein Bohrloch 11 angeordnet, das im wesentlichen aus der zylindrischen Vorbohrung 11′ und einer kreisringförmigen, gemäß Fig.1 profilierten Hinterschneidung 14 besteht. Darüber hinaus ist die Form des Bohrlochs 11 durch einen Sohlenkegel 16 bestimmt, dessen Kegelform der Herstellung der Hinterschneidung 14 dient.

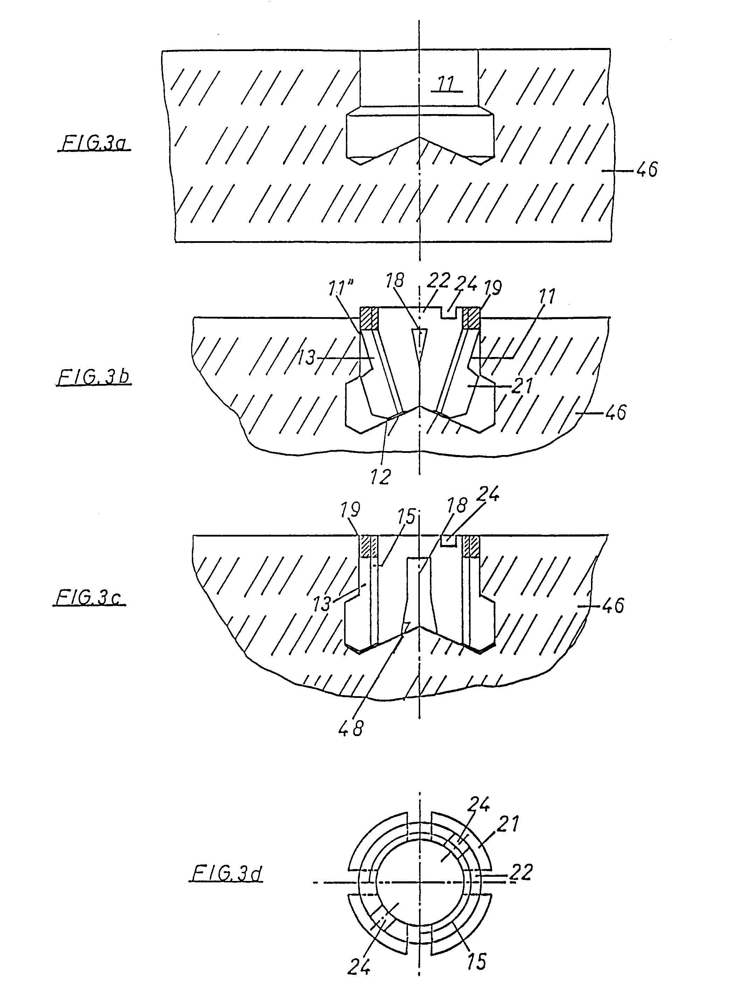

Weiterer Bestandteil der Befestigungseinrichtung 45 ist ein Dübel 12, der durch den Hals 11˝ des mit einem Bohrlochdurchmesser 20 versehenen Bohrlochs 11 eingesetzt werden muß. Der Dübel 12 ist im Prinzip hülsenförmig und mit einem Innengewinde 15 zum Einschrauben des Gewindebauteils 10 versehen. Bohrungssohlenseitig ist der Dübel 12 längsgeschlitzt, wobei die Längsschlitze 18 bis in die Nähe des ungeschlitzten Dübelendes 19 reichen, so daß dort lediglich ein schmaler Steg 22 bleibt, vgl. Fig.3b. Durch die Schlitze 18 ist der Dübel 12 bohrungssohlenseitig mit Spreizlappen 13 versehen, die an ihren freien Enden der Hinterschneidung 14 des Bohrlochs 11 entsprechend vorgeformt sind. Es sind also Vorformungen 21 vorhanden, die exakt der Hinterschneidung 14 entsprechend profiliert sind, eventuell mit Untermaß. Außerdem ist der Dübel 12 sohlenseitig mit einem Rücksprung 17 versehen, der entsprechend dem Sohlenkegel 16 kegelig ausgebildet ist, so daß der Dübel 12 das Bohrloch 11 bohrungssohlenseitig vollständig ausfüllt.

Vor dem Einsetzen des Dübels 12 bzw. vor dem Einschrauben des Gewindebauteils 10 wird in das mit der Hinterschneidung 14 fertiggestellte Bohrloch 11 ein Kleber eingegeben, beispielsweise ein Silikonkleber. Dieser dient in bekannter Weise der zusätzlichen Befestigung, indem er den Dübel 12 und das Gewindebauteil 10 miteinander und mit dem Werkstück 46 verklebt und außerdem die gesamte Anordnung abdichtet, wenn er in genügender Menge eingegeben wurde.

Der Dübel 12 wird gemäß Fig.1 in das Bohrloch 11 eingesetzt, indem ein mit einem Griff 23' versehener Einstecktrichter 23 verwendet wird, durch dessen Einstecköffnung 47 der Dübel 12 nach unten gedrückt wird, wobei die Spreizlappen 13 darstellungsgemäß verformt werden. Während sich also die Vorformungen 21 bohrlochparallel ausrichten, stellen sich die Spreizlappen 13 in ihrem Bereich zwischen den Vorformungen 21 und dem ungeschlitzten Dübelende 19 schräg. Diese Schrägstellung wird durch eine entsprechende Bemessung des Schlitzes 18 erreicht. Die Form des Schlitzes ist aus Fig.3c ersichtlich. Sie ist so ausgestaltet, daß sie Erweiterungen bildende Abschrägungen 48 hat, so daß die Spreizlappen gemäß Fig.1 bzw. Fig.3b zusammengedrückt werden können, damit der Dübel 12 durch den Hals 11'' des Bohrlochs 11 eingebracht werden kann. Der Einstecktrichter 23 ist im wesentlichen ringzylinderförmig und mit dem aus Fig.1 ersichtlichen Schlitz versehen, damit er seitlich weggezogen werden kann. Der Dübel 12 kann auch aus vorverformtem flexiblem Werkstoff bestehen.

Wenn der Dübel 12 in die aus Fig.2 ersichtliche Lage gebracht ist, kann das Gewindebauteil 10 vollständig eingeschraubt werden. Es drückt dabei die Spreizlappen 13 radial nach außen in die aus Fig.2 ersichtliche Lage, sofern diese nicht infolge ihrer Elastizität in diese Lage eingesprungen sind. Beim Einschrauben gelangt das Gewindebauteil 10 in die aus Fig.2 ersichtliche Lage, in der sein dem Sohlenkegel 16 entsprechend vorgeformter kegeliger Rücksprung 26 dem Sohlenkegel 16 dicht benachbart ist, so daß das Gewindebauteil 10 die Vorformungen 21 über deren gesamte Höhe abstützt. Dadurch ist für eine optimale formschlüssige Verankerung gesorgt, ohne daß radiale oder axiale Spreizkräfte in das Werkstück 46 abgetragen werden müssen. Der Rücksprung 26 gewährleistet außerdem, daß sich das Gewindebauteil 10 auf dem Sohlenkegel 16 zentriert. Letzteres steht infolgedessen senkrecht zum Werkstück 46 und richtet auch den Dübel 12 aus, der zur Vermeidung von Spreizkräften entsprechend mit Minustoleranzen gegenüber dem Bohrloch 11 versehen sein muß.

Fig.2 zeigt in ihrem rechten Teil, daß das ungeschlitzte Dübelende 19 nach dem Einbau des Dübels 12 mit der Außenfläche des Werkstücks 46 fluchtet. Im linken Teil ist ein Überstand des Dübels 12 dargestellt, der sich dadurch ergibt, daß der Dübel 12 länger ist, als das Bohrloch 11 tief ist. Das dem Werkstück 46 benachbarte Bauteil muß dann mit seinem das Gewindebauteil 10 umgreifenden Durchmesser auch das herausragende Ende des Dübels 12 umgreifen, wenn es am Werkstück 46 anliegen soll. Die größere Schenkellänge der Spreizlappen 13 hat offensichtlich den Vorteil, daß ein radial nach innen gerichtetes Zusammendrücken der Spreizlappen 13 mit vergleichsweise geringeren Auslenkungen verbunden ist und infolgedessen mit geringeren Kräften bzw. mit geringerer Verformungsenergie der Spreizlappen 13. Der Überstand des Dübels 12 hat darüber hinaus den Vorteil, daß die Beanspruchbarkeit der Befestigungseinrichtung gegen Scherkräfte gesteigert wird. Es ist sogar möglich, den Dübel 12 in seinem außerhalb des Bohrlochs gelegenen Bereich radial zu verstärken, also zu verdicken, um besonders große Scherkraftverstärkungen zu erreichen.

In Fig.3a ist das noch nicht von einem Dübel 12 besetzte Bohrloch 11 eines Werkstücks 46 im Schnitt dargestellt. Fig.3b zeigt einen Dübel 12, dessen Spreizlappen 13 beim Einbringen des Dübels 12 in das Bohrloch 11 von der Darstellung in Fig.1 abweichend ausgebildet sind, nämlich auch bei einem Zusammendrücken der Vorformungen 21 gerade bleibend. Eine derartige Dübelform liegt vor, wenn der Dübel 12 aus einem nichtelastischen, bleibende Verformungen erwarten lassenden Kunststoff oder aus einem Metall besteht, beispielsweise Messing. In diesem Fall müssen die Verformungen von dem Steg 22 des ungeschlitzten Dübelendes 19 übernommen werden, der die Spreizlappen 13 miteinander verbindet. Der Dübel 12 kann also vorverformt werden, wie aus Fig. 3b ersichtlich ist und in die aus dieser Figur ersichtliche Lage in das Bohrloch 11 hineingesteckt werden. Er muß dann durch Einschrauben des Gewindebauteils 10 in die aus Fig.3c ersichtliche Lage gespreizt werden, wozu das Gewindebauteil 10 ebenso ausgebildet ist, wie in den Fig.1,2.

Damit der Dübel 12 während des Einschraubens des Gewindebauteils 10 festgehalten werden kann, besitzt er in seinem ungeschlitzten Dübelende Schlüsselöffnungen 24, die einander gemäß der Dübelaufsicht in Fig.3d gegenüberliegen. Für diese Schlüsselöffnungen 24 wird ein parallel zum Werkstück 46 angeordneter gabelförmiger Schlüssel benutzt, der in die Schlüsselöffnungen 24 einsteckbare Vorsprünge hat.

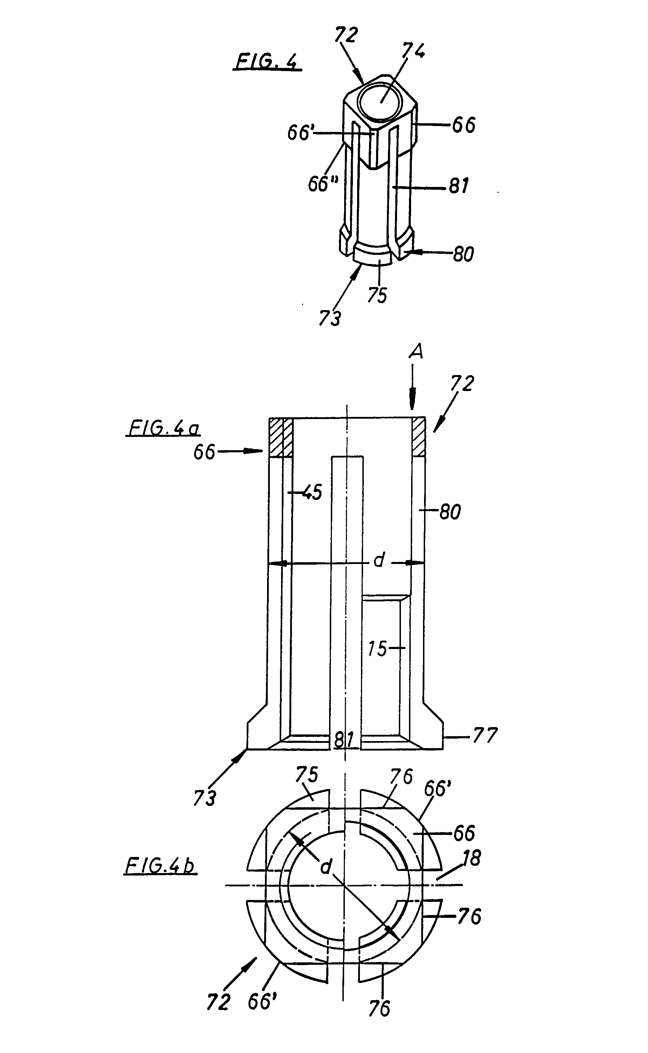

Der in Fig.4 bis 4b dargestellte Dübel 72 einer Befestigungseinrichtung ist vom unteren Ende 73 bis in das obere Dübelende 66 hinein längsgeschlitzt und besitzt infolgedessen vier Spreizlappen 80, die jeweils durch einen Längsschlitz 81 voneinander getrennt sind. Die Form der Spreizlappen 80 ergibt sich des weiteren durch eine Innenbohrung 74 sowie durch am unteren Ende 73 vorhandene Vorformungen 75, welche den Hinterschneidungen 14 entsprechend ausgebildet sind und in diese formschlüssig eingreifen können.

Das obere Ende 66 ist unrund, nämlich im wesentlichen vierkantig, während der darunter liegende Bereich kreisringförmige Querschnitte aufweist. Diese über die Länge des Dübels 72 unterschiedliche Querschnittsgestaltung zeigt sich nicht in Fig.4a, jedoch in der Aufsicht in der Fig.4b, aus der ersichtlich ist, daß der Vierkant des oberen Endes 66 von Abflachungen 76 gebildet ist, wobei jeweils zwei einander gegenüberliegende Abflachungen 76 einem dem Durchmesser d der Spreizlappen 80 entsprechenden Abstand voneinander haben. Der Vierkant 66 springt mit seinen Kanten 66′ nicht über den Außendurchmesser 77 der Vorformungen 75 vor.

Der Dübel 72 ist gemäß Fig.4a mit einem Innengewinde 45 versehen, welches sich gemäß der linken Hälfte der Fig. 4a über die gesamte Länge des Dübels 72 erstreckt, oder das lediglich in der unteren Hälfte des Dübels 72 gemäß der rechten Hälfte der Fig.4a vorhanden ist. In diesem Fall ergibt sich eine schnellere Montage, eine geringfügig größere Flexibilität der Spreizlappen 80 zwischen dem oberen Ende 66 und dem Bereich des Dübels 72 mit dem Innengewinde 15 gemäß Fig.4a. Es ergibt sich außerdem etwas Freiraum für seitliche Bewegungen des Gewindebauteils 10.

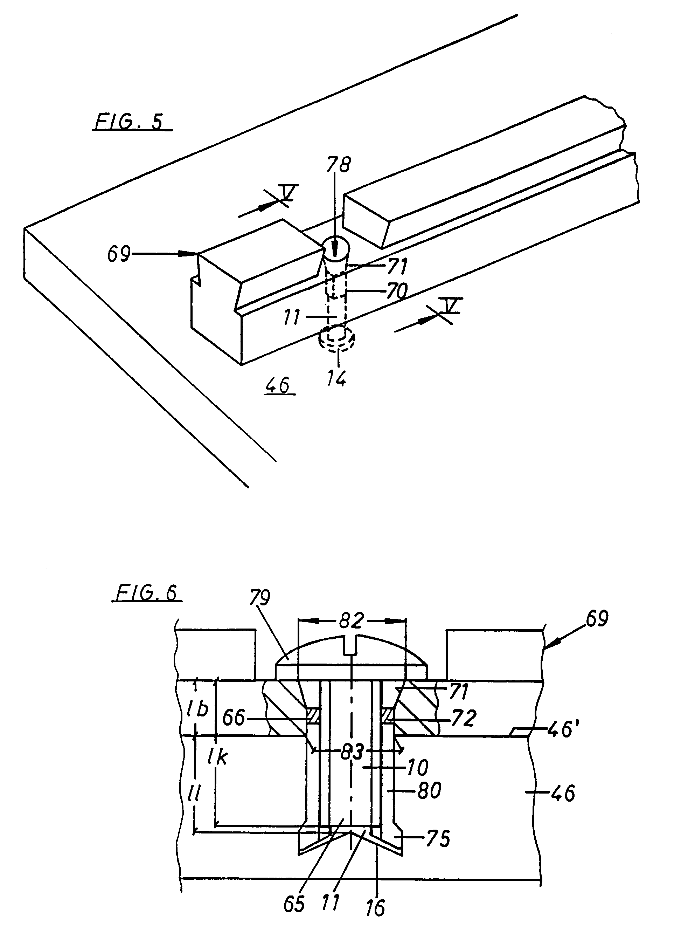

In Fig.5 ist das Werkstück 46 als vergleichsweise dünne Platte dargetellt, die beispielsweise aus Glas oder Keramik besteht. Auf die eine Seite dieser Platte ist ein Bauteil 69 aufgeklebt oder sonstwie fest gehalten. Dieses Bauteil 69 ist eine Kupplungsleiste, die z.B. aus Metall oder Kunststoff besteht und mit einem nicht dargestellten Gegenkupplungsteil beispielsweise einer Fassaden- bzw. Fensterkonstruktion zusammenwirkt, um das Werkstück 46 zu halten. Es könnte aber auch ein z.B. hakenförmiges, im wesentlichen auf den Bereich der Bohrung 78 beschränktes Bauteil sein oder ein Halteprofil zur Einzelbefestigung.

Fig.5 zeigt des weiteren das Bohrloch 11 bzw. die Vorbohrung 11 mit der Hinterschneidung 14 sowie eine Bohrung 78 im Bauteil 69, bestehend aus einer trichterförmigen Einstecköffnung 71 und einer sich in Längsrichtung zum Bohrloch 11 anschließenden unrunden, nämlich vierkantigen Ausnehmung 70. Die aus der Einstecköffnung 71 und der Ausnehmung 70 bestehende Bohrung 78 fluchtet mit dem Bohrloch 11 des Werkstücks 46.

Im Bereich der Bohrung 78 ist das Bauteil 69 so weit ausgenommen, daß gemäß Fig.6 der Schraubenkopf 79 des als Kopfschraube ausgebildeten Gewindebauteils 10 zur flachen Auflage oberhalb der Bohrung 78 kommt. Das Gewindebauteil 10 ist in den Dübel 72 eingeschraubt, der mit den vorgeformten Vorformungen 75 seiner Spreizlappen 80 in die Hinterschneidungen 14 des Bohrlochs 11 eingreifen und darin durch das freie Ende 65 des Gewindebauteils 10 gehalten wird. Dieses freie Ende 65 ist nahe der Sohle 16 des Bohrlochs 11 angeordnet, endet jedoch mit geringfügigem Abstand zu dieser Sohle 16, so daß es weder auf die Sohlenspitze drücken und damit eine Bruchgefahr des möglicherweise spröden Werkstücks 46 herbeiführen kann, noch eine Befestigung des Bauteils 69 verhindert. Zweckmäßigerweise ist das untere, der Sohle 16 benachbarte Ende des Gewindebauteils 10 - in Abweichung von der Darstellung der Fig.6 - hohlkegelig ausgebildet ähnlich Fig.2, damit die Spreizlappen 80 zur Erzielung höherer Auszugswerte besser in der Hinterschneidung 14 gehalten werden. Die Eingreiflänge lₖ des Schraubenschafts des Gewindebauteils 10 ist etwas geringer, als die Länge bzw. Tiefe l_{b} der Bohrung 78 plus der Länge lₗ des Bohrlochs 11 bis zur Spitze der Sohle 16.

Der Zusammenbau bzw. der Einbau des Dübels 72 und des Gewindebauteils 10 erfolgt derart, daß zunächst das freie Ende 65 in den Dübel 72 nur zum Teil eingeschraubt wird, so daß beide eine Baueinheit bilden, bei der die Spreizlappen 80 zueinander ausweichen können. Dieses Ausweichen ist in den Fig.1,3b dargestellt und entsprechend beschrieben. Diese Baueinheit wird zunächst in das Bauteil 69 bzw. dessen Bohrung 78 elngesteckt. Das Bauteil 69 hat dübeleinsteckseitig eine trichterförmige Einstecköffnung 71 mit einem Durchmesser 82, der dem Außendurchmesser der Spreizlappen 80 im Bereich der Vorformungen 75 oder etwas größer entspricht. Die Einstecköffnung 71 verengt sich bis auf das Vierkantmaß 83 des unrunden bzw. Vierkantendübelendes 66. Die Höhe des oberen Dübelendes 66 ist so bemessen, daß seine Unterkante 66'' bündig oder etwas größer mit der Oberfläche 46' des Werkstücks 46 liegt.

Beim Einstecken des Dübels 72 werden die Spreizlappen 80 infolgedessen zusammengedrückt und gelangen über die Einstecköffnung 71 in die Vierkantausnehmung 70 und von dort weiter in das Bohrloch 12, bis sie sich mit ihren Vorformungen 75 in der Hinterschneidung 14 entspannen können. Dann wird das Verbindungsteil 10 beispielsweise mit einem Schraubendreher bis zum Anschlag des Schraubenkopfes 79 auf dem als Kupplungsteil ausgebildeten Bauteil 69 eingeschraubt.

## Patentansprüche

1. Befestigungseinrichtung (45) eines Gewindebauteils (10) in einem nicht durchgehenden hinterschnittenen Bohrloch (11), in dem ein bohrungssohlenseitig längsgeschlitzter Dübel (12) angeordnet ist, der an seinem inneren Ende der Form der Hinterschneidung (14) des Bohrlochs (11) entsprechend vorgeformt ist, der ein eine Längsverstellung des Gewindebauteils (10) gestattendes Innengewinde (15) aufweist, und dessen Spreizlappen (13,80) von dem Gewindebauteil (10) in die Hinterschneidung (14) gespreizt gehalten sind, **dadurch gekennzeichnet,** daß der Dübel (12,72) mit einem Innengewinde (15) zum Einschrauben des Gewindebauteils (10) versehen ist, das die Vorformungen (21,75) über deren gesamte Höhe abstützt.

2. Einrichtung nach Anspruch 1, **dadurch gekennzeichnet,** daß der Dübel (12,72) bohrungssohlenseitig einen einem Sohlenkegel (16) angepaßten vorgeformten kegeligen Rücksprung (17) aufweist.

3. Einrichtung nach Anspruch 1 oder 2, **dadurch gekennzeichnet,** daß die Schlitze (18) des Dübels (12,72) bis in die Nähe des ungeschlitzten Dübelendes (19) reichen und eine das Zusammendrücken der Spreizlappen (13) auf eine mindestens Bohrlochdurchmesser (20) gestattende Breite haben und/oder daß der Dübel (12,72) länger als das Bohrloch (11) tief ist.

4. Einrichtung nach Anspruch 3, **dadurch gekennzeichnet,** daß die Schlitze (18) des Dübels (12,72) im Bereich der in die Hinterschneidung (14) eingreifenden Vorformungen (21,75) der Spreizlappen (13,80) deren Zusammendrücken erlaubend erweitert sind.

5. Einrichtung nach einem oder mehreren der Ansprüche 1 bis 4, **dadurch gekennzeichnet,** daß der Dübel (12,72) aus Metall besteht und die in sich unverformbaren Spreizlappen (13,80) am ungeschlitzten Dübelende (19) mit verformbaren Stegen (22) zusammengehalten sind.

6. Einrichtung nach einem oder mehreren der Ansprüche 1 bis 4, **dadurch gekennzeichnet,** daß der Dübel (12,72) aus verformbarem Werkstoff besteht oder verformbar ist und seine Spreizlappen (13,80) von einem Einstecktrichter (23) auf einen mindestens dem Bohrlochdurchmesser (20) entsprechenden Außendurchmesser zusammendrückbar sind.

7. Einrichtung nach einem oder mehreren der Ansprüche 1 bis 6, **dadurch gekennzeichnet,** daß der Dübel (12) in seinem ungeschlitzten Dübelende (19) mindestens eine sein mit einem Schlüssel erfolgendes Festhalten beim Eindrehen des Gewindebauteils (10) gestattene Schlüsselöffnung (24) hat.

8. Einrichtung nach einem oder mehreren der Ansprüche 1 bis 7, **dadurch gekennzeichnet,** daß das Gewindebauteil (10) eine zumindest längs der Vorformungen der Spreizlappen (13,80) Gewinde (25) aufweisende Schraube ist, die bohrungssohlenseitig einen einem Sohlenkegel (16) angepaßten vorgeformten kegeligen Rücksprung (26) aufweist.

9. Einrichtung nach einem oder mehreren der Ansprüche 1 bis 8, **dadurch gekennzeichnet,** daß der Dübel (72) ein unrundes oberes Dübelende (66) zur Anordnung in einer entsprechend unrunden Ausnehmung (70) eines Bauteils (69) hat.

10. Einrichtung nach Anspruch 9 , **dadurch gekennzeichnet,** daß das Gewindebauteil (10) eine zum Einbau des Dübels (72) mit ihrem freien Ende (65) in den Dübel (72) eingeschraubte Kopfschraube ist.

11. Einrichtung nach einem der Ansprüche 9 oder 10, **dadurch gekennzeichnet,** daß der Dübel (72) mit den Vorformungen (75) seiner Spreizlappen (80) spreizkraftfrei in der Hinterschneidung (14) einer Platte angeordnet ist.

## Claims

1. Anchoring device (45) of a threaded member (10) in a blind, undercut drillhole (11), in which a longitudinally slotted plug (12) is arranged on the side of the threaded member adjacent to the bottom of the drillhole, said plug at its inner end being preformed to match the shape of the undercut (14) in the drillhole (11), said plug having an internal thread (15) permitting a longitudinal displacement of the threaded member (10), and its spreadable arms (13, 80) being held spread out into the undercut (14) by the threaded member (10), characterised in that the plug (12, 72) is provided with an internal thread (15) for the screwing in of the threaded member (10) which supports the preformed parts (21, 75) throughout their full depth.

2. Device according to claim 1, characterised in that the plug (12, 72) has a preformed, tapered recoil zone (17) on the side adjacent to the bottom of the drillhole and matched to a bottom cone (16) in the drillhole.

3. Device according to claim 1 or 2, characterised in that the slots (18) of the plug (12, 72) extend into the region of the unslotted end (19) of the plug and have a width permitting the pressing together of the spreadable arms (13) to at least the diameter (20) of the drillhole and/or that the plug (12, 72) is longer than the drillhole (11) is deep.

4. Device according to claim 3, characterised in that the slots (18) of the plug (12, 72) are enlarged in the region of the preformed parts (21, 75) of the spreadable arms (13, 80) which engage in the undercut (14) to facilitate their pressing together.

5. Device according to one or more of claims 1 to 4, characterised in that the plug (12, 72) is of metal and the undeformable spreadable arms (13, 80) are held together at the unslotted end (19) of the plug by deformable webs (22).

6. Device according to one or more of claims 1 to 4, characterised in that the plug (12, 72) is of deformable material or is deformable and its spreadable arms (13, 80) are pressed together by an entry die (23) having an outside diameter corresponding at least to the diameter (20) of the drillhole.

7. Device according to one or more of claims 1 to 6, characterised in that the plug (12) at its unslotted end (19) has at least one key slot (24) permitting it to be held fast by means of a key upon the entry rotation of the threaded member (10).

8. Device according to one or more of claims 1 to 7, characterised in that the threaded member (10) is a screw having threads (25) at least along the preformed parts of the spreadable arms (13, 80), the screw having a preformed, tapered recoil zone (26) matched to a bottom cone (16) in the drillhole.

9. Device according to one or more of claims 1 to 8, characterised in that the plug (72) has a non-circular upper end (66) for fitting into a correspondingly non-circular hole (70) in a prefabricated member (69).

10. Device according to claim 9, characterised in that the threaded member (10) is a headed screw having its free end (65) screwed into the plug (72) for the insertion of the plug (72).

11. Device according to one of claims 9 or 10, characterised in that the plug (72) has the preformed parts (75) of its spreadable arms (80) arranged in the undercut (14) of a plate free from spreading forces.

## Revendications

1. Dispositif de fixation (45) d'un élément fileté (10) dans un perçage non traversant (11) à contre-dépouille dans lequel est disposée une cheville (12) qui est fendue longitudinalement, du côté du fond du perçage, dont l'extrémité intérieure est préformée suivant la forme de la contre-dépouille (14) du perçage (11), qui comporte également un filetage intérieur (15) permettant un déplacement longitudinal de l'élément fileté (10), et dont les pattes d'écartement (13, 80) sont maintenues écartées dans la contre-dépouille (14) par l'élément fileté (10), caractérisé en ce que la cheville (12, 72) est pourvue d'un filetage intérieur (15) destiné au vissage de l'élément fileté (10) qui soutient les parties préformées (21, 75) sur toute leur hauteur.

2. Dispositif selon la revendication 1, caractérisé en ce que la cheville (12, 72) comporte, du côté du fond du perçage, une partie en retrait conique préformée (17) adaptée à un fond conique (16).

3. Dispositif selon la revendication 1 ou 2, caractérisé en ce que les fentes (18) de la cheville (12, 72) s'étendent jusqu'à proximité de l'extrémité non fendue (19) de la cheville et présentent une largeur permettant la compression des pattes d'écartement (13) suivant au moins le diamètre (20) du perçage, et/ou en ce que la longueur de la cheville (12, 72) est supérieure à la profondeur du perçage (11).

4. Dispositif selon la revendication 3, caractérisé en ce que les fentes (18) de la cheville (12, 72) sont élargies dans la zone des parties préformées (21, 75) des pattes d'écartement (13, 80) venant en prise dans la contre-dépouille (14), permettant ainsi la compression desdites pattes.

5. Dispositif selon l'une au moins des revendications 1 à 4, caractérisé en ce que la cheville (12, 72) se compose de métal, et les pattes d'écartement (13, 80) indéformables en soi sont réunies, à l'extrémité non fendue (19) de la cheville, par des bandes déformables (22).

6. Dispositif selon l'une au moins des revendications 1 à 4, caractérisé en ce que la cheville (12, 72) se compose d'un matériau déformable, ou est déformable, et ses pattes d'écartement (13, 80) sont aptes à être comprimées par un cône d'introduction (23) pour définir un diamètre extérieur correspondant au moins au diamètre (20) du perçage.

7. Dispositif selon l'une au moins des revendications 1 à 6, caractérisé en ce que la cheville (12) comporte, dans son extrémité non fendue (19), au moins une ouverture de clé (24) permettant son immobilisation à l'aide d'une clé lors de l'introduction de l'élément fileté (10).

8. Dispositif selon l'une au moins des revendications 1 à 7, caractérisé en ce que l'élément fileté (10) est défini par une vis comportant, au moins le long des parties préformées des pattes d'écartement (13, 80), un filetage (25) et, du côté du fond du perçage, une partie en retrait conique (26) préformée adaptée à un fond conique (16).

9. Dispositif selon l'une au moins des revendications 1 à 8, caractérisé en ce que la cheville (72) comporte une extrémité supérieure (66) qui n'est pas ronde, destinée à être disposée dans une cavité (70) d'un élément de construction (69) qui n'est pas ronde, elle non plus.

10. Dispositif selon la revendication 9, caractérisé en ce que l'élément fileté (10) est défini par une vis à tête dont l'extrémité libre (65) est vissée dans la cheville (72) en vue du montage de celle-ci.

11. Dispositif selon l'une des revendications 9 ou 10, caractérisé en ce que la cheville (72), avec les parties préformées (75) de ses pattes d'écartement (80), est disposée sans effort d'écartement dans la contre-dépouille (14) d'une plaque.
